# EUROPEAN PATENT SPECIFICATION

(11) **EP 2 096 283 B1**
(45) Date of publication and mention of the grant of the patent: **16.06.2010**
(21) Application number: 09002692.3
(22) Date of filing: 25.02.2009
(51) Int. Cl.: F02D 19/02, F02M 21/02, F02M 25/10, F02M 25/12

(54) **Hydrogen-oxygen fuel supplying system**
Wasserstoff-Sauerstoff Kraftstoffzufürsystem
Dispositif d'alimentation en Oxygène et Hydrogène

(30) Priority: 27.02.2008 TW 97106783
(43) Date of publication of application: 02.09.2009
(73) Proprietor: Huang, Kuo-Fong, Taoyuan City T'ao yuan 330 (TW)
(72) Inventor: Huang, Kuo-Fong, Taoyuan City T'ao yuan 330 (TW)
(74) Representative: TER MEER - STEINMEISTER & PARTNER GbR

(56) References cited:
- EP-A- 0 333 664
- WO-A-2007/101329
- US-A1- 2006 065 214
- US-A1- 2006 090 712
- US-A1- 2006 260 562

## Description

### BACKGROUND

The present invention generally relates to a fuel supplying system, and more especially, to a hydrogen-oxygen fuel supplying system.

Currently, greenhouse effect warming in the earth is becoming more and more apparent, which results in desertification of soil, sandstorm, air pollution, heat weave, extreme climate, disappearance of lakes and fresh water shortage. The cause of the greenhouse effect warming is pollution gas produced by overfull usage of gasoline and petroleum in heavy industry, various vehicles such as airplane, steamboat, and cars. Although most countries in the world are carrying out plan of energy saving and pollution prevention; however, such efforts can't radically solve above problems, and even can't overtake increment of pollution.

Nowadays, all the people in world suffer from continuously risen oil price and electricity price. Shortage of petroleum and pollution produced from use of petroleum get people in a dilemma that we have to use petroleum. Every country is dedicated to develop alternative energy, for example, solar energy and wind energy, to replace petroleum. Currently, the entire world gives expectation to a new technology of hydrogen energy (fuel cell). However, there is a long period when the general power source such as cars and generator can be replaced with hydrogen energy, to say nothing of special power source used in heavy industry and aerostat.

However, petroleum and electric energy are main cause of greenhouse effect and energy pollution. Therefore, there is a desire to completely solve pollution from use of energy and greenhouse effect.

US 2006/0065214 A1 describes a hydrogen fuel system for an internal combustion engine. The hydrogen fuel system comprises an electrolyzer, which is provided with water by a water reservoir and provided with electrical energy by a battery. The electrolyzer is connected to a hydrogen compressor, which is, in turn, connected with a storage tank for storing the generated hydrogen. The hydrogen storage tank is connected to the engine, wherein an expander is interconnected between the hydrogen storage tank and the engine.

US 2006/0260562 A1 describes a system and a method for the co-generation of fuel having a closed loop energy cycle. Oxygen and hydrogen generated in the electrolyzers is provided to a hydrogen tank and a oxygen tank, respectively, after passing compressors. In addition, a reformer is provided to crack or hydrogenate the fuel of a diesel tank, wherein the generated hydrogen is provided after passing a compressor to the hydrogen tank. Gas from the oxygen tank and the hydrogen tank is supplied to the engine block, wherein the electrolysis-created pure oxygen from the oxygen has to be combined with compressed air from a roots blower and to be enriched so that complete combustion could be achieved.

WO 2007/101329 A1 describes a system and a method for hydrogen-assisted cold starting of an engine. A hydrogen delivery system, which supplies hydrogen to a combustion engine, comprises a hydrogen storage reservoir in communication with an input port of the engine, for storing a supply of hydrogen. The hydrogen delivery system further comprises a hydrogen storage release valve for retaining hydrogen in the storage reservoir and selectively releasing hydrogen from the storage reservoir when the engine is started. In addition, an electrolysis cell having at least one electrolyte input port, at least electrolyte output port, an electrolyte circulating system for replenishing electrolyte in the electrolysis cell, and at least one gas output port for supplying hydrogen under pressure to the storage reservoir is provided.

### BRIEF SUMMARY

The present invention provides a hydrogen-oxygen fuel supplying system, which employ water as a fuel source and can reduce cost of fuel.

The present invention also provides a hydrogen-oxygen fuel supplying system, which employ water as a fuel source and can reduce pollution of air and environment.

The present invention provides a hydrogen-oxygen fuel supplying system, which is comprised of a water hydrolyzing apparatus, a heat dissipation apparatus, a filter, a supercharger, a hydrogen-oxygen container, and a pressure adjusting means. The water hydrolyzing apparatus is used to hydrolyze water thereby producing a mixture gas of hydrogen, oxygen, and water vapor. The heat dissipation apparatus is connected to the water hydrolyzing apparatus and used to dissipate heat generated in the water hydrolyzing apparatus. The filter is connected to the water hydrolyzing apparatus and used to filter water vapor in the mixture gas. The supercharger is connected to the filter and used to compress the hydrogen and oxygen. The hydrogen-oxygen container is connected to the supercharger and used to store compressed hydrogen and oxygen. The pressure adjusting means is connected to the hydrogen-oxygen container and used to regulate an output pressure of hydrogen and oxygen.

The hydrogen-oxygen fuel supplying system of the present invention further includes an accumulator electrically to the water hydrolyzing apparatus, a power controller connecting the accumulator and the water hydrolyzing apparatus, a power converter connected to the supercharger, a filtering apparatus connected to the hydrogen-oxygen container, a check valve connected to the filtering apparatus, an electromagnetic valve connected to the check value, an air damper switch connected to the pressure adjusting means, and a mixer connected to the air damper switch. The accumulator is used to provide a portion of electrical power to the hydrolyzing apparatus. The power controller is used to improve and stabilize the output of electrical power. The power switch is used to convert an output voltage of the accumulator to a relative low voltage. The filtering apparatus further filters water vapor in the mixture gas and purifies output of the hydrogen and oxygen. The check valve is used to prevent reflux and explosion of the mixture gas. The mixer is used to fully mix the mixture gas and air.

### BRIEF DESCRIPTION OF THE DRAWINGS

These and other features and advantages of the various embodiments disclosed herein will be better understood with respect to the following description and drawings, in which like numbers refer to like parts throughout, and in which:

Figure 1 is a schematic view showing a hydrogen-oxygen fuel supplying system in accordance with a first embodiment.

Figure 2 is a schematic view showing a hydrogen-oxygen fuel supplying system in accordance with a second embodiment.

### DETAILED DESCRIPTION

Aspects of the present invention will be described accompany with the following embodiments. However, it is understood that the embodiments are intended to illustrative the present invention and can't be used to limit the scope of the present invention.

Embodiment 1

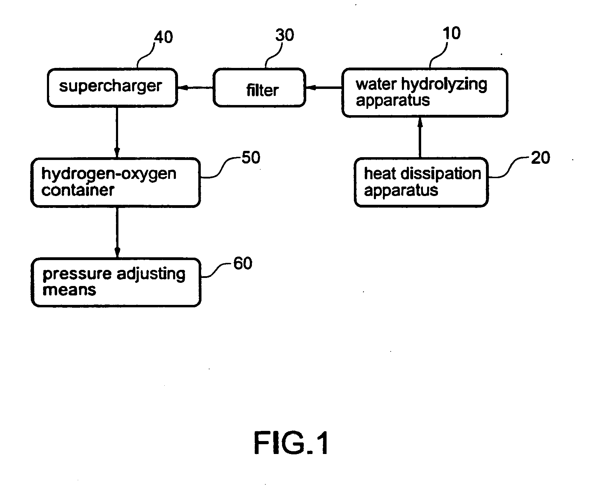

Please referring to Figure 1, the present invention provides a hydrogen-oxygen fuel supplying system, which includes a hydrolyzing apparatus 10, a heat dissipation apparatus 20, a filter 30, a supercharger 40, a hydrogen-oxygen container 50, and a pressure adjusting means 60.

The hydrolyzing apparatus 10 includes a water electrolysis bath and two electrode plates disposed in the electrolysis bath. The two electrode plates hydrolyze the water into a mixture gas of hydrogen, oxygen and water vapor. Preferably, the two electrode plates are honeycomb shaped, that is a number of gas holes are distributed in the two electrode plates just like a honeycomb. The honeycomb shaped electrodes can maximize surface area of the two electrode plates thereby improving output of hydrogen and oxygen when water is hydrolyzed. Furthermore, a water pressure balancer (not shown) can be mounted in the hydrolyzing apparatus 10. The water pressure balancer is configured for balancing pressure of hydrogen and oxygen when hydrogen and oxygen are stored separately.

The heat dissipation apparatus 20 is mounted on a surface of the hydrolyzing apparatus 10. The heat dissipation apparatus 20 is used to dissipate heat generated in the hydrolyzing apparatus. Specifically, the heat dissipation apparatus 20 starts to dissipate heat when the temperature in the hydrolyzing apparatus 10 is higher than a predetermined value, and the heat dissipation apparatus 20 is shut down when the temperature in the hydrolyzing apparatus 10 is lower that the predetermined value. The heat dissipation apparatus 20 includes water-cooling pipes, fan, and temperature controlling member.

The filter 30, which is connected to the hydrolyzing apparatus 10, is configured for filtering water vapor in the hydrolyzed mixture gas thereby purifying hydrogen and oxygen.

The supercharger 40, which is used to compress the hydrogen and oxygen come from the filter 30, is connected to the filter.

The hydrogen-oxygen container 50 is connected to the supercharger 40. The hydrogen-oxygen container 50 is used to store compressed hydrogen and oxygen. In addition, the hydrogen-oxygen container 50 may include a hydrogen storing chamber and an oxygen storing chamber defined therein. The hydrogen storing chamber and the oxygen storing chamber can be used to storing hydrogen and oxygen respectively.

The pressure adjusting means 60 is connected to the hydrogen-oxygen container 50, and is configured for adjusting output pressure of the hydrogen and oxygen.

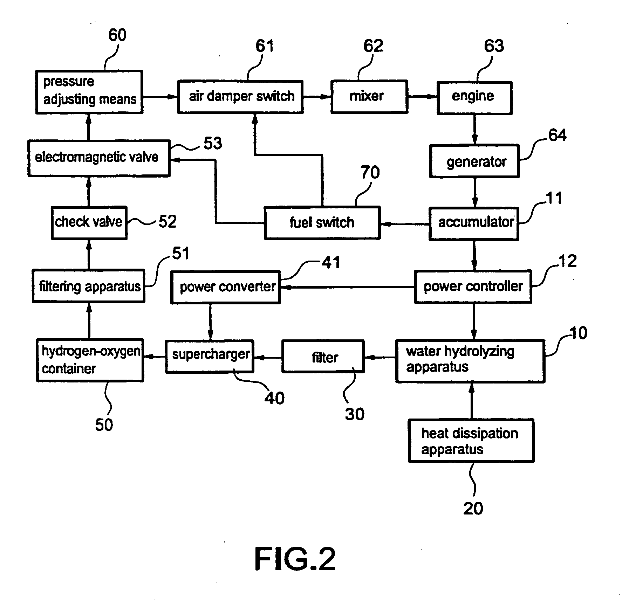

When applied into practice, the hydrogen-oxygen fuel supplying system can be connected to an engine 63 (please referring to Figure 2). The hydrogen-oxygen fuel supplying system supplies hydrogen and oxygen fuel to the engine 63 thereby driving the engine 63 to work and provide power; therefore, the present invention utilize environment friendly water as fuel source, cost of fuel and air pollution caused by organic fuel can be reduced.

Embodiment 2

Please referring to Figure 2, a difference of the present embodiment and the first embodiment is that the present embodiment can further include an accumulator 11, a power controller 12, a power converter 41, a filtering apparatus 51, a check valve 52, an electromagnetic valve 53, an air damper switch 61 and a mixer 62.

The accumulator 11 is electrically connected to the hydrolyzing apparatus 10. The accumulator 11 is configured for providing a portion of electrical power to the hydrolyzing apparatus 10.

The power controller 12 is electrically connected to the accumulator 11 and the hydrolyzing apparatus 10. The power controller 12 is used to improve and stabilize the output of electrical power. The power controller 12 is consisting of a capacitor and an electrical voltage regulator.

The power converter 41 is connected to the supercharger 40 for converting a high output voltage of the accumulator 11 to a relative low voltage. For example, the output voltage of the accumulator 11 equals to 36 volts, the power converter 41 converts the output voltage of 36 volts to 12 volts. The power converter 41 is a voltage regulator.

The filtering apparatus 51 is connected to the hydrogen-oxygen container 50. The filtering apparatus 51 further filters water vapor in the mixture gas and purifies output of the hydrogen and oxygen.

The check valve 52 is connected to the filtering apparatus 51 for preventing reflux and explosion of the mixture gas.

The electromagnetic valve 53, which includes a value, is connected to the check valve 52.

The air damper switch 61 is connected to the pressure adjusting means 60. The air damper switch 61 includes an air damper.

The mixer 62 is connected to the air damper switch 61. The mixer 62 is used to fully mix the mixture gas and air introduced from outside of the mixer 62. The mixer 62 is consisting of an air nozzle and a vortex mixing member.

When applied into practice, the hydrogen-oxygen fuel supplying system of the present invention can be connected to an engine 63 (please referring to Figure 2). The hydrogen-oxygen fuel supplying system supplies gas fuel produced by mixing the mixture gas and air to the engine 63 thereby driving the engine 63 to work. The engine 63 drives a generator 64 to generating electrical power. The electrical power is returned to the accumulator 11 such that the accumulator is capable of providing electrical power uninterruptedly. The engine 63 can be an automobile engine, a marine engine, an aeronautic engine and etc. Therefore, the present invention utilize environment friendly water as fuel source, cost of fuel and air pollution caused by organic fuel can be reduced. Furthermore, a certain amount of electrical power is retained in the accumulator 11; the hydrogen-oxygen fuel supplying system can provide gas fuel uninterruptedly.

However, the present invention can't be merely restricted in applications of engine, it is understood that the present invention can also be used in gas stove or electric water heater as fuel source. In addition, the present invention can be combined with the engine 63 and the generator 64 thereby constituting a water fuel engine generator, which can be employed as electric power source in home applications, commercial applications, community applications and city applications, and so much as a new generation of electric power source that can used to replace conventional power house.

In the present embodiment, the hydrogen-oxygen fuel supplying system further includes a fuel switch 70, which is electrically connected to the accumulator 11. The fuel switch 70 is used to switch fuel fed into the hydrogen-oxygen fuel supplying system. The fuel can be one of water, gasoline, and alcohol. When the fuel switch 70 is set to a water fuel mode, the electromagnetic valve 53, the valve and air damper of the air damper switch 61 are opened, and then the hydrogen-oxygen fuel supplying system is ready for providing hydrogen-oxygen fuel; when the fuel switch 70 is set to a gasoline fuel mode or alcohol mode, the electromagnetic valve 53, the valve and air damper of the air damper switch 61 are closed, and then gasoline fuel or alcohol can be fed into the engine 63. Therefore, the hydrogen-oxygen fuel supplying system can also provide other fuel (gasoline for example) to the engine except providing hydrogen-oxygen fuel to the engine 63.

As described above, cost of fuel, pollution of air and environment can be reduced by using the hydrogen-oxygen fuel supplying system, the aforementioned disadvantages is therefore overcome and the hydrogen-oxygen fuel supplying system is valuable in industrial use indeed.

## Claims

1. A hydrogen-oxygen fuel supplying system, comprising:
- a water hydrolyzing apparatus (10) configured for hydrolyzing water thereby producing a mixture gas of hydrogen, oxygen, and water vapor:
- a heat dissipation apparatus (20) connected to the water hydrolyzing apparatus (10), the heat dissipation apparatus (20) being configured for dissipating heat generated in the water hydrolyzing apparatus (10);
- a filter (30) connected to the water hydrolyzing apparatus (10), the filter (30) being configured for filtering water vapor in the mixture gas;
- a supercharger (40) connected to the filter, the supercharger (40) being configured for compressing the hydrogen and oxygen;
- a hydrogen-oxygen container (50) connected to the supercharger (40), the hydrogen-oxygen container (50) being configured for storing the hydrogen and oxygen:
- a pressure adjusting means (60) connected to the hydrogen-oxygen container (50), the pressure adjusting means (60) being configured for regulating an output of the hydrogen and oxygen,
- an accumulator (11) electrically connected to the water hydrolyzing apparatus (10),
- a power controller (12) connected to the water hydrolyzing apparatus (10), wherein the power controller (12) is configured for improving and stabilizing the output of electrical power,
- a power converter (41) connected to the supercharger (40), wherein the power converter (41) is configured for converting an output voltage of the accumulator to a relative low voltage,
- a filtering apparatus (51) connected to the hydrogen-oxygen container (50), wherein the filtering apparatus (51) is configured for filtering water vapor in the mixture gas stored in the hydrogen-oxygen container (50) and purifying an output of the hydrogen-oxygen container (50),
- a check valve (52) connected to the filtering apparatus (51), wherein the check valve (51) is configured for preventing reflux of the mixture gas,
- an electromagnetic valve (53) connected to the check valve (52),
- an air damper switch (61) connected to the pressure adjusting means (60), and
- a mixer (62) connected to the air damper switch (61), wherein the mixer (62) is configured for mixing the mixture gas and air.

## Patentansprüche

1. System für die Versorgung mit Brennstoff aus Wasserstoff und Sauerstoff, das umfasst:
- eine Wasserhydrolysierungsvorrichtung (10), die konfiguriert ist, um Wasser zu hydrolysieren, um **dadurch** ein Mischgas aus Wasserstoff, Sauerstoff und Wasserdampf zu erzeugen;
- eine Wärmeabführungsvorrichtung (20), die mit der Wasserhydrolysierungsvorrichtung (10) verbunden ist, wobei die Wärmeabführungsvorrichtung (20) konfiguriert ist, um in der Wasserhydrolysierungsvorrichtung (10) erzeugte Wärme abzuführen;
- einen Filter (30), der mit der Wasserhydrolysierungsvorrichtung (10) verbunden ist, wobei der Filter (30) konfiguriert ist, um Wasserdampf in dem Mischgas zu filtern;
- eine Verdichtungseinrichtung (40), die mit dem Filter verbunden ist, wobei die Verdichtungseinrichtung (40) konfiguriert ist, um den Wasserstoff und den Sauerstoff zu verdichten;
- einen Wasserstoff-Sauerstoff-Behälter (50), der mit der Verdichtungseinrichtung (40) verbunden ist, wobei der Wasserstoff-Sauerstoff-Behälter (50) konfiguriert ist, um den Wasserstoff und den Sauerstoff zu speichern;
- ein Druckeinstellmittel (60), das mit dem Wasserstoff-Sauerstoff-Behälter (50) verbunden ist, wobei das Druckeinstellmittel (60) konfiguriert ist, um eine Ausgabe des Wasserstoffs und des Sauerstoffs zu regulieren,
- einen Akkumulator (11), der mit der Wasserhydrolysierungsvorrichtung (10) elektrisch verbunden ist,
- eine Leistungssteuereinheit (12), die mit der Wasserhydrolysierungsvorrichtung (10) verbunden ist, wobei die Leistungssteuereinheit (12) konfiguriert ist, um die Ausgabe elektrischer Leistung zu verbessern und zu stabilisieren,
- einen Leistungswandler (41), der mit der Verdichtungseinrichtung (40) verbunden ist, wobei der Leistungswandler (41) konfiguriert ist, um eine Ausgangsspannung des Akkumulators in eine verhältnismäßig niedrige Spannung umzuwandeln,
- eine Filterungsvorrichtung (51), die mit dem Wasserstoff-Sauerstoff-Behälter (50) verbunden ist, wobei die Filterungsvorrichtung (51) konfiguriert ist, um Wasserdampf in dem Mischgas, das in dem Wasserstoff-Sauerstoff-Behälter (50) gespeichert ist, zu filtern und um eine Ausgabe des Wasserstoff-Sauerstoff-Behälters (50) zu reinigen,
- ein Rückschlagventil (52), das mit der Filterungsvorrichtung (51) verbunden ist, wobei das Rückschlagventil (51) konfiguriert ist, um einen Rückfluss des Mischgases zu verhindern,
- ein elektromagnetisches Ventil (53), das mit dem Rückschlagventil (52) verbunden ist,
- einen Luftdämpferschalter (61), der mit dem Druckeinstellmittel (60) verbunden ist, und
- einen Mischer (62), der mit dem Luftdämpferschalter (61) verbunden ist, wobei der Mischer (62) konfiguriert ist, um das Mischgas und Luft zu mischen.

## Revendications

1. Système d'alimentation de carburant hydrogène-oxygène, comprenant :
- un appareil d'hydrolyse d'eau (10) configuré pour hydrolyser de l'eau et produire ainsi un mélange gazeux d'hydrogène, d'oxygène et de vapeur d'eau ;
- un appareil de dissipation thermique (20) relié à l'appareil d'hydrolyse d'eau (10), l'appareil de dissipation thermique (20) étant configuré pour dissiper la chaleur générée dans l'appareil d'hydrolyse d'eau (10) ;
- un filtre (30) relié à l'appareil d'hydrolyse d'eau (10), le filtre (30) étant configuré pour filtrer la vapeur d'eau dans le mélange gazeux ;
- un compresseur (40) relié au filtre, le compresseur (40) étant configuré pour comprimer l'hydrogène et l'oxygène ;
- un conteneur hydrogène-oxygène (50) relié au compresseur (14), le conteneur hydrogène-oxygène (50) étant configuré pour stocker l'hydrogène et l'oxygène ;
- un moyen d'ajustement de pression (60) relié au conteneur hydrogène-oxygène (50), le moyen d'ajustement de pression (60) étant configuré pour réguler une sortie d'hydrogène et d'oxygène ;
- un accumulateur (11) connecté électriquement à l'appareil d'hydrolyse d'eau (10),
- un contrôleur de puissance (12) connecté à l'appareil d'hydrolyse d'eau (10), ledit contrôleur de puissance (12) étant configuré pour améliorer et stabiliser la sortie de puissance électrique ;
- un convertisseur de puissance (12) connecté au compresseur (14), ledit convertisseur de puissance (41) étant configuré pour convertir un voltage de sortie de l'accumulateur vers un voltage relativement bas,
- un appareil de filtration (51) relié au conteneur hydrogène-oxygène (50), tel que l'appareil de filtration (51) est configuré pour filtrer la vapeur d'eau dans le mélange gazeux stocké dans le conteneur hydrogène-oxygène (50) et purifier une sortie du conteneur hydrogène-oxygène (50) ;
- un clapet anti-retour (52) relié à l'appareil de filtration (51), ledit clapet anti-retour (51) étant configuré pour empêcher un reflux du mélange gazeux ;
- une valve électromagnétique (53) connectée au clapet anti-retour (52) ;
- un commutateur de volet d'air (61) connecté au moyen d'ajustement de pression (60), et
- un mélangeur (62) connecté au commutateur de volet d'air (61), tel que le mélangeur (62) est configuré pour mélanger le mélange gazeux et de l'air.
